# FASCICULE DE BREVET EUROPEEN

(11) **EP 0 864 611 B1**
(45) Date de publication et mention de la délivrance du brevet: **12.05.2004**
(21) Numéro de dépôt: 98400561.1
(22) Date de dépôt: 10.03.1998
(51) Int. Cl.: C08L 95/00, B01D 17/04, E01C 7/18

(54) **Emulsions de bitume, leur méthode de préparation et leur utilisation pour l'entretien ou la construction de revêtements routiers**
Bitumenemulsionen, ihr Herstellungsverfahren und ihre Verwendung für die Konstruktion und Wartung von Strassenoberflächen
Bitumen emulsions, method for their preparation and their use for the maintenance or the making of road surfaces

(30) Priorité: 10.03.1997 FR 9702809
(43) Date de publication de la demande: 16.09.1998
(73) Titulaire: COLAS, 92653 Boulogne-Billancourt Cédex (FR)
(72) Inventeur: Durand, Graziella, 78460 Chevreuse (FR); Poirier, Jean-Eric, 78180 Montigny le Bretonneux (FR); Chappat, Michel, 78310 Maurepas (FR)
(74) Mandataire: Michelet, Alain

(56) Documents cités:
- EP-A- 0 491 107
- FR-A- 2 618 350
- SE-B- 453 760

## Description

L'invention concerne une émulsion de bitume, un procédé d'obtention d'une émulsion de bitume et un procédé d'obtention d'un matériau bitumineux pour la construction ou l'entretien des chaussées.

L'invention concerne plus particulièrement les émulsions pour enduits superficiels et les émulsions pour la préparation d'enrobés à froid, ainsi qu'un procédé d'obtention de telles émulsions et un procédé d'obtention d'un matériau bitumineux avec de telles émulsions.

Les émulsions désignées ci-avant sont des émulsions aqueuses dont la rupture est en partie conditionnée par l'évaporation de l'eau. Dans le cas d'une émulsion aqueuse de bitume pour un enduit comportant des granulats, la rupture de l'émulsion entraîne la fixation des granulats à la surface de la chaussée sur laquelle l'enduit a été répandu, et le maintien de la cohésion entre les granulats. Pour améliorer la qualité de l'enduit, différents procédés visant à la maîtrise de la rupture ont été essayés. Citons à titre d'exemple, le répandage simultané sur la chaussée d'une émulsion aqueuse de bitume et d'un agent de rupture projeté dans le pinceau d'émulsion, de manière telle que la rupture de l'émulsion se produise rapidement dans la masse de l'émulsion au moment de son épandage. Une autre solution consiste à incorporer des agents rupteurs à l'émulsion de bitume sous forme d'une émulsion ou d'une suspension dans une phase de solvant, ou encore l'utilisation d'agents rupteurs à l'intérieur d'une enveloppe créée mécaniquement par exemple par la méthode dite des surfaces rotatives, par exemple par centrifugation.

Dans le cas d'une émulsion aqueuse de bitume appliquée pour la préparation d'enrobés à froid, en général, et pour la préparation d'une couche de roulement d'une chaussée en particulier, la rupture de l'émulsion est également conditionnée par l'évaporation de l'eau, mais diffère de la rupture des émulsions utilisées pour la première application en ce que l'émulsion doit rester stable longtemps et doit permettre notamment d'enrober parfaitement toutes les fractions granulométriques et cela à partir de l'étape de malaxage, pendant le transport des enrobés et jusque dans le traîneau du finisseur. De plus, la rupture de l'émulsion doit pouvoir être effectuée de manière telle que la couche de roulement puisse être compactée et que la cohésion des enrobés soit homogène sur toute l'épaisseur du revêtement. Ceci demande à la fois une maniabilité de longue durée et la maîtrise du moment de rupture de l'émulsion.

On connaît du document FR-A-2.618.350 un procédé permettant de provoquer la rupture d'une émulsion bitumineuse au moyen d'un agent de rupture mis en oeuvre sous forme de microcapsules dont l'enveloppe est un matériau qui est attaqué chimiquement et/ou physiquement par l'émulsion pour libérer l'agent de rupture après une durée prédéterminée de contact avec l'émulsion. Ce procédé permet de retarder le moment auquel la rupture de l'émulsion intervient. Mais, lorsque l'agent de rupture est introduit et dispersé dans l'émulsion, le moment de rupture ne peut plus être modifié, il ne dépend que de la durée de contact des capsules avec l'émulsion. Il s'en suit que ce procédé connu ne permet pas de maîtriser ou de contrôler le mouvement d'une émulsion de bitume, il permet seulement de le différer de quelques dizaines de minutes.

Par ailleurs, le procédé cité ci-avant requiert que la nature de l'enveloppe des microcapsules soit adaptée à celle de l'émulsion. Ainsi, une émulsion acide demande - outre un agent de rupture basique - une enveloppe de microcapsules sensible à des acides.

Le but de l'invention est de proposer une émulsion de bitume dont la rupture peut être maîtrisée, évitant les inconvénients cités ci-avant.

Le but de l'invention est atteint avec une émulsion de bitume comprenant une phase bitumineuse constituée par un bitume choisi parmi les bitumes purs, les bitumes fluxés et les bitumes modifiés ainsi qu'une phase aqueuse constituée au moins par de l'eau et un agent émulsifiant.

Selon l'invention, l'émulsion de bitume comprend un agent rupteur de l'émulsion encapsulé permettant le contrôle de la rupture de l'émulsion, la rupture des capsules résultant d'un effet mécanique.

Selon des modes de réalisation avantageux de l'invention, l'invention peut avoir les caractéristiques ci-après prises à elles seules ou en toutes leurs combinaisons techniquement possibles:
- Les capsules emprisonnant l'agent rupteur d'émulsion sont susceptibles de rupture par pression à la pression de compactage.
- Les capsules emprisonnant l'agent rupteur d'émulsion sont susceptibles de rupture par cisaillement.
- L'agent rupteur est emprisonné dans des capsules ayant un diamètre moyen inférieur à 100 µm.
- L'agent rupteur est emprisonné dans des capsules ayant un diamètre moyen compris entre 5 et 50 µm.
- La paroi des capsules est constituée de polymères du type polycondensat obtenues par polycondensation interfaciale.
- Les capsules emprisonnant l'agent rupteur d'émulsion sont en polyamide.
- Les capsules emprisonnant l'agent rupteur d'émulsion sont en polyurée.
- Les capsules emprisonnant l'agent rupteur d'émulsion sont en polyamide-polyurée.

Les capsules se séparent facilement de leur milieu réactionnel, qui est un milieu huileux, et peuvent ainsi être transférées directement dans l'émulsion ou dans une phase aqueuse.

L'invention concerne également un procédé d'obtention d'une émulsion de bitume, comprenant les étapes d'introduction d'une phase bitumineuse comportant un bitume et une phase aqueuse comportant de l'eau et un agent émulsifiant dans un moulin colloïdal, et de brassage des phases bitumineuse et aqueuse.

Selon l'invention, ce procédé d'obtention d'une émulsion de bitume comprend également une étape d'introduction d'un agent rupteur d'émulsion encapsulé permettant le contrôle de la rupture de l'émulsion, l'agent de rupture pouvant être libéré par une action mécanique produite sur l'émulsion.

Les capsules sont ajoutées à l'émulsion maintenue chaude après sa fabrication. L'homogénéisation s'effectue par simple brassage.

L'invention concerne aussi un procédé d'obtention d'un matériau bitumineux pour la chaussée comportant une émulsion de bitume et des agrégats. Ce procédé comprend les étapes d'introduction d'une émulsion bitumineuse et d'agrégats dans un malaxeur et de malaxage.

Selon l'invention, ce procédé comprend également une étape d'introduction d'un agent rupteur de l'émulsion encapsulé permettant le contrôle de la rupture de l'émulsion, l'agent de rupture pouvant être libéré par une action mécanique produite sur l'émulsion.

Selon des modes de réalisation avantageux de ce procédé d'obtention d'un matériau bitumineux, l'étape d'introduction de l'agent rupteur d'émulsion encapsulé peut être effectuée soit avant, soit après celle d'introduction des agrégats.

Selon une variante de ces modes de réalisation de l'invention, l'agent rupteur peut être introduit dans l'émulsion de bitume avant le répandage du mélange ainsi obtenu, alors que les agrégats ou granulats sont introduits après le répandage du mélange.

Ainsi, l'invention apporte une solution au problème de la maîtrise de la rupture des émulsions bitumineuses applicable aussi bien aux émulsions de bitume seules telles les couches d'accrochage qu'aux enrobés à froid et aux enduits superficiels.

D'autres caractéristiques et avantages de l'invention ressortiront de la description de deux exemples de réalisation de la préparation d'une émulsion de bitume donnée ci-après.

Une émulsion de bitume comprenant entre 55% et 75% en poids de liant bitumineux, est préparée dans un moulin colloïdal à partir d'une phase bitumineuse comprenant soit un bitume pur, soit un bitume fluxé (par exemple par un fluxant pétrolier, distillat de vapocraquage ou de viscoréduction), soit un bitume modifié par un polymère (par exemple un bitume modifié par du styrène-butadiène-styrène) et à partir d'une phase aqueuse comprenant au moins de l'eau et un émulsifiant.

L'agent rupteur encapsulé est préparé à partir d'un rupteur d'émulsion qui est un agent chimique dont la nature dépend du type d'agent émulsifiant. Le plus souvent, les émulsions sont des émulsions cationiques. Dans ce cas, l'agent rupteur peut être une solution aqueuse d'une base forte minérale (NaOH) ou un agent tensioactif anionique (comme un alkylsulfate, un alkylsulfonate ou alkylsulfosuccinate ou un de leurs mélanges) ou un agent polymérique anionique. Le rupteur en solution aqueuse est emprisonné dans des capsules dont les parois sont constituées de polymères du type polycondensat tel les polyurées, les polyamides, et les polyamides/polyurées (parois mixtes).

L'agent rupteur d'émulsion encapsulé est mélangé à l'émulsion de bitume. Ce mélange est avantageusement fait lors de la préparation de l'émulsion de bitume. Ensuite, le mélange est stocké à chaud pendant une période pouvant aller de quelques heures à environ quinze jours. De préférence, le temps de stockage est compris entre 2 et 8 jours environ.

Les capsules préparées pour l'emprisonnement de l'agent rupteur d'émulsion ont une stabilité dans leur milieu réactionnel, c'est-à-dire dans un solvant, d'au moins 9 à 10 mois. En même temps, les capsules supportent des températures de l'ordre de 60 à 90°C.

De plus, les capsules se caractérisent par leur diamètre moyen qui se situe entre 5 et 50 µm. Les capsules se rompent par pression à la pression de compactage ou par cisaillement au passage dans les jets de la répandeuse. Lorsque le principe actif, c'est-à-dire le rupteur est libéré, la rupture de l'émulsion a lieu.

Du fait de la présence de l'agent rupteur réparti dans la masse de l'émulsion, la rupture de l'émulsion est plus complète que lorsque l'agent rupteur est pulvérisé séparément ou dans le jet de l'émulsion de bitume. Elle se fait au coeur même de l'émulsion. On évite ainsi notamment la formation d'un film rompu en surface qui risque de retarder la rupture dans la masse de l'émulsion. Ce phénomène est d'autant plus net lorsqu'on est en présence d'une émulsion de bitume élastomère.

L'avantage de l'utilisation d'un agent rupteur encapsulé peut être illustré par le rapport entre la stabilité d'un agent non encapsulé qui provoque une rupture d'une émulsion après quelques minutes au plus tard, et la stabilité d'un agent rupteur encapsulé qui est de plusieurs jours.

### EXEMPLE 1

### I. Préparation de capsules en polyamide-polyurée

### - Préparation des réactifs:

Introduire 2,5g d'émulsifiant non ionique et 437,5g d'huile dans un bécher de 2 litres (phase I);

Dissoudre dans un erlen 2,5g de Na₂CO₃H₂O et de la diamine dans 40g d'une solution aqueuse et agiter magnétiquement (phase II);

Introduire du dichlorure d'acide et du diisocyanate dans 217,5g d'huile (la même que dans la phase I) dans un erlen et agiter magnétiquement (phase III).

Le rapport molaire dichlorure d'acide/diisocyanate est compris entre 20:80 et 50:50, de préférence entre 35:65 et 50:50; et le rapport molaire diamine/autres monomères est compris entre 1:5 et 1:1, de préférence entre 1:2 et 1:1. La quantité de polymère formé est de 0,05 à 0,1 mole pour la quantité de solvant de l'exemple.

### - Réactions:

Agiter mécaniquement le bécher de 2 litres à 450 tours/minute. La pale d'agitation doit être à environ 1 cm du fond du bécher de façon à avoir une agitation homogène. Introduire à la main la phase II. Après quinze minutes vérifier au microscope que l'émulsification s'est faite correctement. Les particules doivent être de diamètre homogène et bien individualisées. Les diamètres doivent être inférieurs à 15 µm. Ensuite introduire la phase III par l'intermédiaire d'une ampoule de coulée en 15 minutes. Dès que la coulée est finie, diminuer l'agitation à 350 tours/minute. La réaction dure environ 6 heures. Cette préparation permet d'obtenir des capsules sphériques, bien individualisées, résistantes à la plaque et ayant des diamètres réguliers de l'ordre de 5 à 10 µm. Cette préparation peut être modifiée de façon à encapsuler plus ou moins d'agent rupteur. Les capsules ainsi obtenues ont une stabilité allant de 4 à 6 jours dans une émulsion de bitume à 60°C, à 110 jours dans l'eau à température ambiante et au-delà de douze mois dans le milieu réactionnel.

### II. Mélange des capsules à l'émulsion

### EXEMPLE 2

### I. Préparation de capsules en polyurée

### - Préparation des réactifs:

Peser 8g d'agent tensioactif non ionique et 344g de solvant hydrocarboné dans un bécher de 2 litres (phase I);

Peser 40g d'agent rupteur en solution aqueuse et un composé diamine dans un erlen et mélanger avec agitation magnétique (phase II);

Peser 40 ml du même solvant hydrocarboné que dans la phase I et un composé diisocyanate dans un erlen et agiter magnétiquement (phase III).

Le rapport molaire diamine/diisocyanate est compris entre 60:40 et 40:60. La proportion totale du polycondensat polymère est de 1 à 2,7g pour 100 ml de solvant hydrocarboné.

### - Réactions:

Emulsifier la phase II en la versant dans la phase I en 5 minutes par une ampoule de coulée, sous agitation mécanique à 800 tours/minute. Maintenir cette agitation jusqu'à ce que l'émulsion soit homogène (environ 5 minutes). Introduire la phase III rapidement à la main en 30 secondes et réduire l'agitation à 500 tours/minute. L'agitation est maintenue à température ambiante pendant 6 heures. La dispersion ainsi obtenue est à 10% concentrée en capsules de rupteur.

Les capsules ainsi obtenues sont sphériques, bien individualisées et résistantes à la plaque et ont un diamètre régulier de l'ordre de 20 à 50 µm. Cette préparation peut être modifiée de façon à encapsuler plus ou moins d'agent rupteur. La stabilité de ces capsules va de 6 à 10 jours dans une émulsion de bitume à 60°C à 110 jours dans l'eau à température ambiante et au-delà de 12 mois dans un milieu réactionnel.

Le choix des monomères est fait parmi
- les composés dichlorure d'acide:
   chlorure d'adipoyle,
   chlorure de sébacoyle,
   2,6-naphtalène dichlorure d'acide,
   etc.
- les composés di(ou poly)amine:
   éthylène diamine
   propylène diamine
   diéthylène triamine
   triéthylène tétramine
   aminoéthyléthanolamine
   dipropylène triamine
   etc.
- les composés diisocyanates:
   1,6-diisocyanatohexane
   isothane
   toluène diisocyanate
   etc.

II - Mélange des capsules à l'émulsion

## Revendications

1. Emulsion de bitume comprenant une phase bitumineuse constituée par un bitume choisi parmi les bitumes purs, les bitumes fluxés et les bitumes modifiés ainsi qu'une phase aqueuse constituée au moins par de l'eau et un agent émulsifiant, **caractérisée en ce qu'**elle comprend un agent rupteur de l'émulsion encapsulé permettant le contrôle de la rupture de l'émulsion, la rupture des capsules résultant d'un effet mécanique.

2. Emulsion de bitume selon la revendication 1, telle qu'elle puisse être stockée à chaud pendant une période pouvant aller de quelques heures à environ 15 jours.

3. Emulsion selon l'une des revendications 1 et 2, **caractérisée en ce que** les capsules emprisonnant l'agent rupteur de l'émulsion sont susceptibles de rupture par pression à la pression de compactage.

4. Emulsion selon l'une des revendications 1 et 2, **caractérisée en ce que** les capsules emprisonnant l'agent rupteur de l'émulsion sont susceptibles de rupture par cisaillement.

5. Emulsion selon l'une des revendications 1 à 4, **caractérisée en ce que** l'agent rupteur est emprisonné dans des capsules ayant un diamètre moyen inférieur à 100 µm.

6. Emulsion selon la revendication 5, **caractérisée en ce que** les capsules ont un diamètre moyen compris entre 5 et 50 µm.

7. Emulsion selon l'une quelconque des revendications 1 à 6, **caractérisée en ce que** la paroi des capsules est constituée de polymères du type polycondensat obtenues par polycondensation interfaciale.

8. Emulsion selon l'une quelconque des revendications 1 à 7, **caractérisée en ce que** les capsules sont en polyamide.

9. Emulsion de bitume selon l'une quelconque des revendications 1 à 7, **caractérisée en ce que** les capsules sont en polyurée.

10. Emulsion de bitume selon l'une quelconque des revendications 1 à 7, **caractérisée en ce que** les capsules sont en polyamide-polyurée.

11. Procédé d'obtention d'une émulsion de bitume comprenant les étapes
- introduction d'une phase bitumineuse comportant un bitume et d'une phase aqueuse comportant de l'eau et un agent émulsifiant dans un moulin colloïdal, et
- brassage des phases bitumineuse et aqueuse,
**caractérisé en ce qu'**il comprend une étape d'introduction d'un agent rupteur de l'émulsion encapsulé permettant le contrôle de la rupture de l'émulsion, l'agent de rupture pouvant être libéré par une action mécanique produite sur l'émulsion.

12. Procédé d'obtention d'un matériau bitumineux comportant une émulsion de bitume et des agrégats, comprenant les étapes
- introduction d'une émulsion bitumineuse comportant un bitume et d'une phase aqueuse comportant de l'eau et un agent émulsifiant dans un malaxeur,
- introduction des agrégats dans le malaxeur, et
- malaxage de l'émulsion bitumineuse et des agrégats,
**caractérisé en ce qu'**il comprend une étape d'introduction d'un agent rupteur de l'émulsion encapsulé permettant le contrôle de la rupture de l'émulsion, l'agent de rupture pouvant être libéré par une action mécanique produite sur l'émulsion.

13. Procédé selon la revendication 12, **caractérisé en ce que** l'agent rupteur de l'émulsion est introduit avant les agrégats.

14. Procédé selon la revendication 12, **caractérisé en ce que** l'agent rupteur de l'émulsion est introduit après les agrégats.

## Claims

1. Bitumen emulsion comprising a bituminous phase composed of a bitumen selected from the pure bitumens, the fluxed bitumens and the modified bitumens and an aqueous phase composed of at least water and an emulsifying agent, **characterized in that** it comprises an encapsulated emulsion breaking agent allowing the control of the breaking of the emulsion, the breaking of the capsules resulting from a mechanical effect.

2. Bitumen emulsion according to claim 1, such that it can be stored hot for a period of between a few hours to about fifteen days.

3. Emulsion according to one of claims 1 and 2, **characterized in that** the capsules containing the emulsion breaking agent are able to be broken by pressure at the compaction pressure.

4. Emulsion according to one of claims 1 and 2, **characterized in that** the capsules containing the emulsion breaking agent are able to be broken by shearing.

5. Emulsion according to one of claims 1 to 4, **characterized in that** the breaking agent is contained in capsules having an average diameter of less than 100 µm.

6. Emulsion according to claim 5, **characterized in that** the capsules have an average diameter of between 5 and 50 µm.

7. Emulsion according to any one of claims 1 to 6, **characterized in that** the wall of the capsules is composed of polymers of the polycondensate type obtained by interfacial polycondensation.

8. Emulsion according to any one of claims 1 to 7, **characterized in that** the capsules are of polyamide.

9. Bitumen emulsion according to any one of claims 1 to 7, **characterized in that** the capsules are of polyurea.

10. Bitumen emulsion according to any one of claims 1 to 7, **characterized in that** the capsules are of polyamide-polyurea.

11. Method of producing a bitumen emulsion comprising the steps
- introduction of a bituminous phase comprising a bitumen and an aqueous phase comprising water and an emulsifying agent into a colloid mill, and
- agitating the bituminous and aqueous phases,
**characterized in that** it comprises a step of introducing an encapsulated emulsion breaking agent allowing control of the breaking of the emulsion, the breaking agent being able to be released by mechanical action on the emulsion.

12. Method of producing a bituminous material comprising a bitumen emulsion and aggregates, comprising the steps
- introduction of a bituminous emulsion comprising a bitumen and an aqueous phase comprising water and an emulsifying agent into a mixer,
- introduction of the aggregates into the mixer, and
- mixing the bituminous emulsion and the aggregates,
**characterized in that** it comprises a step of introducing an encapsulated emulsion breaking agent allowing control of the breaking of the emulsion, the breaking agent being able to be released by mechanical action on the emulsion.

13. Method according to claim 12, **characterized in that** the emulsion breaking agent is introduced before the aggregates.

14. Method according to claim 12, **characterized in that** the emulsion breaking agent is introduced after the aggregates.

## Patentansprüche

1. Bitumenemulsion, umfassend eine bituminöse Phase, die aus einem Bitumen gebildet ist, das unter den reinen Bitumen, den Kaltbitumen und den modifizierten Bitumen ausgewählt ist, sowie eine wässerige Phase, die mindestens aus Wasser und einem Emulgator gebildet ist, **dadurch gekennzeichnet, dass** sie ein eingekapseltes Demulgierungsmittel umfasst, das die Kontrolle der Demulgierung ermöglicht, wobei sich der Bruch der Kapseln aus einer mechanischen Wirkung ergibt.

2. Bitumenemulsion nach Anspruch 1, derart beschaffen, dass sie während eines Zeitraumes von einigen Stunden bis zu ungefähr 15 Tagen heiß gelagert werden kann.

3. Emulsion nach einem der Ansprüche 1 und 2, **dadurch gekennzeichnet, dass** die Kapseln, die das Demulgierungsmittel einschließen, durch Verdichtungsdruck auseinander brechbar sind.

4. Emulsion nach einem der Ansprüche 1 und 2, **dadurch gekennzeichnet, dass** die Kapseln, die das Demulgierungsmittel einschließen, durch Scherbeanspruchung auseinander brechbar sind.

5. Emulsion nach einem der Ansprüche 1 bis 4, **dadurch gekennzeichnet, dass** das Demulgierungsmittel in Kapseln mit einem durchschnittlichen Durchmesser von weniger als 100 µm eingeschlossen ist.

6. Emulsion nach Anspruch 5, **dadurch gekennzeichnet, dass** die Kapseln einen durchschnittlichen Durchmesser zwischen 5 und 50 µm aufweisen.

7. Emulsion nach einem der Ansprüche 1 bis 6, **dadurch gekennzeichnet, dass** die Wand der Kapseln aus Polymeren des Typs Polykondensat gebildet ist, die durch Schnittstellenpolykondensation gewonnen werden.

8. Emulsion nach einem der Ansprüche 1 bis 7, **dadurch gekennzeichnet, dass** die Kapseln aus Polyamid sind.

9. Bitumenemulsion nach einem der Ansprüche 1 bis 7, **dadurch gekennzeichnet, dass** die Kapseln aus Polyurea sind.

10. Bitumenemulsion nach einem der Ansprüche 1 bis 7, **dadurch gekennzeichnet, dass** die Kapseln aus Polyamid-Polyurea sind.

11. Verfahren zur Herstellung einer Bitumenemulsion, umfassend die folgenden Schritte:
- Einführen einer bituminösen Phase, die ein Bitumen aufweist, und einer wässerigen Phase, die Wasser enthält, und eines Emulgators in eine Kolloidmühle, und
- Durchrühren der bituminösen und der wässerigen Phase,
**dadurch gekennzeichnet, dass** es einen Schritt des Einführens eines eingekapselten Demulgierungsmittels umfasst, das die Kontrolle der Demulgierung ermöglicht, wobei das Demulgierungsmittel durch eine bei der Emulsion erzeugte mechanische Wirkung freigesetzt wird.

12. Verfahren zur Herstellung eines bituminösen Materials, umfassend eine Bitumenemulsion und Aggregate, umfassend die folgenden Schritte:
- Einführen einer bituminösen Emulsion, die ein Bitumen aufweist, und einer wässerigen Phase, die Wasser aufweist, und eines Emulgators in einen Mischer,
- Einführen der Aggregate in den Mischer, und
- Mischen der bituminösen Emulsion und der Aggregate,
**dadurch gekennzeichnet, dass** es einen Schritt des Einführens eines eingekapselten Demulgierungsmittels umfasst, das die Kontrolle der Demulgierung ermöglicht, wobei das Demulgierungsmittel durch eine bei der Emulsion erzeugte mechanische Wirkung freigesetzt wird.

13. Verfahren nach Anspruch 12, **dadurch gekennzeichnet, dass** das Demulgierungsmittel vor den Aggregaten eingeführt wird.

14. Verfahren nach Anspruch 12, **dadurch gekennzeichnet, dass** das Demulgierungsmittel nach den Aggregaten eingeführt wird.
